(19) Europäisches Patentamt

European Patent Office

Office européen des brevets

(11) **EP 0 934 609 B1**

(12) **EUROPÄISCHE PATENTSCHRIFT**

(45) Veröffentlichungstag und Bekanntmachung des Hinweises auf die Patenterteilung:
**09.01.2002 Patentblatt 2002/02**

(51) Int Cl.$^7$: **H01Q 3/26**, H04B 17/00, G01S 7/40, H04L 27/26

(21) Anmeldenummer: **97945788.4**

(22) Anmeldetag: **27.10.1997**

(86) Internationale Anmeldenummer:
**PCT/DE97/02480**

(87) Internationale Veröffentlichungsnummer:
**WO 98/19360 (07.05.1998 Gazette 1998/18)**

(54) **VERFAHREN ZUR KALIBRIERUNG SOWIE ANORDNUNG**

CALIBRATION METHOD AND ARRANGEMENT

PROCEDE ET SYSTEME D'ETALONNAGE

(84) Benannte Vertragsstaaten:
**DE FR GB IT SE**

(30) Priorität: **28.10.1996 DE 19644686**

(43) Veröffentlichungstag der Anmeldung:
**11.08.1999 Patentblatt 1999/32**

(73) Patentinhaber: **ROBERT BOSCH GMBH**
**70442 Stuttgart (DE)**

(72) Erfinder:
• **ALBERTY, Thomas**
**D-71522 Backnang (DE)**
• **HAUK, Waldemar**
**D-71522 Backnang (DE)**
• **HESPELT, Volker**
**D-71522 Backnung (DE)**
• **HAGMANNS, Franz-Josef**
**D-71522 Backnang (DE)**

(74) Vertreter: **Manitz, Finsterwald & Partner**
**Postfach 31 02 20**
**80102 München (DE)**

(56) Entgegenhaltungen:
FR-A- 2 735 937     US-A- 5 027 127
US-A- 5 223 842     US-A- 5 412 414

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 934 609 B1

**Beschreibung**

Die Erfindung betrifft ein Verfahren sowie eine Anordnung zur Kalibrierung eines Senders und/oder Empfängers gemäß dem Oberbegriff des Anspruchs 1 bzw. 3.

Stand der Technik

Ein Verfahren sowie eine Anordnung der eingangs genannten Art sind beispielsweise in der US-A-5 412 414 beschrieben. Dabei wird zur Kalibrierung des Sendepfades ein einem Strahlformungsnetzwerk zugeführtes Referenzsignal mit dem nach einem Durchlaufen den Sendepfades über einen Referenzempfänger rückgekoppelten Senderausgangssignal verglichen und ein Phasenschieber im Sinne einer Angleichung der beiden miteinander verglichenen Signale entsprechend nachgestellt. Die Kalibrierung des Empfangspfades erfolgt bei entsprechend umgekehrtem Signalfluß.

Bei SDMA (Space Division Multiple Access)-Funkübertragungssystemen kann man empfangsseitig durch bekannte Strahlformungsnetzwerke mit entsprechenden Adaptionsalgorithmen die Antennencharakteristik so einstellen, daß das Nutzsignal einen großen Antennengewinn erfährt, während Störsignale stark unterdrückt werden.

Aus der DE 41 07 803 A1 ist eine Anordnung bekannt, deren Feststation mit einem Antennen-Array ausgestattet ist. Je nach Phasenansteuerung läßt sich die Form der Strahlungskeule an zu erfassende Objekte adaptieren. Bei der DE 44 21 573 A1, die eine Empfangsanordnung für sich bewegende Objekte aufzeigt, werden die Empfangssignale von Antennenelementen so gewichtet und zu mehreren Signalpfaden zusammengefaßt, daß jeder von ihnen einer anderen Signaleinfallsrichtung der Antenne zugeordnet ist.

Bei einem aus der FR-A-2 735 937 bekannten Kalibrierungsverfahren werden die Unterschiede zwischen verschiedenen Pfaden bestimmt und kalibriert und zur Unterscheidung der verschiedenen Pfade Träger unterschiedlicher Frequenz benutzt.

Ziel der Erfindung ist es, ein verbessertes Verfahren sowie eine verbesserte Anordnung der eingangs genannten Art zu schaffen.

Diese Aufgabe wird bezüglich des Verfahrens erfindungsgemäß durch die kennzeichnenden Merkmale des Anspruchs 1 und bezüglich der Anordnung erfindungsgemäß durch die kennzeichnenden Merkmale des Anspruchs 3 gelöst. Vorteilhafte Ausgestaltungen des erfindungsgemäßen Verfahrens sowie der erfindungsgemäßen Anordnung sind in den Unteransprüchen angegeben.

Mit den Maßnahmen gemäß Anspruch 1 oder 3 ist es möglich, die für den Empfänger vorgesehene Strahlcharakteristik auch für den Sender einzustellen. Für die Kalibrierung der Sender und Empfänger ist lediglich ein Kalibrationsnetzwerk erforderlich, für das einfach realisierbare Abgleichbedingungen einzuhalten sind. Der Hauptvorteil des erfindungsgemäßen Verfahrens liegt darin, daß keine hochgenauen Sender und Empfänger notwendig sind. Abweichungen in den Übertragungsfunktionen der Übertragungsglieder zum Antennen-Array wirken sich nicht nachteilig aus.

Anhand der Zeichnungen werden Ausführungsbeispiele der Erfindung sowie Grundlagen zu Strahlformungsnetzwerken erläutert. Es zeigen:

Figur 1 ein Strahlformungsnetzwerk mit Antennendiagramm für einen Empfänger,
Figur 2 ein Strahlformungsnetzwerk mit Antennendiagramm für einen entsprechenden Sender,

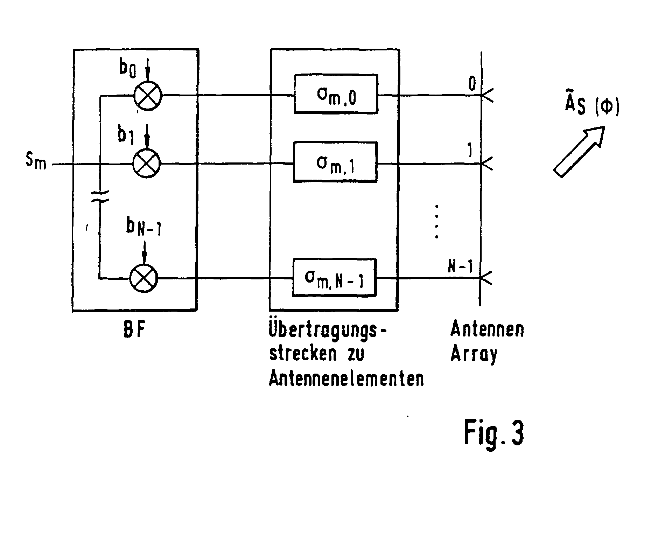

Figur 3 ein Prinzipbild zur Erläuterung der Beeinflussung der Antennencharakteristik durch Übertragungsparameter,
Figur 4 ein Blockschaltbild für die Kalibrierung der Sender beziehungsweise Empfänger und
Figur 5 eine Anordnung mit einem Kalibrierungskoppler und
Figur 6 den Aufbau des Kalibrierungskopplers.

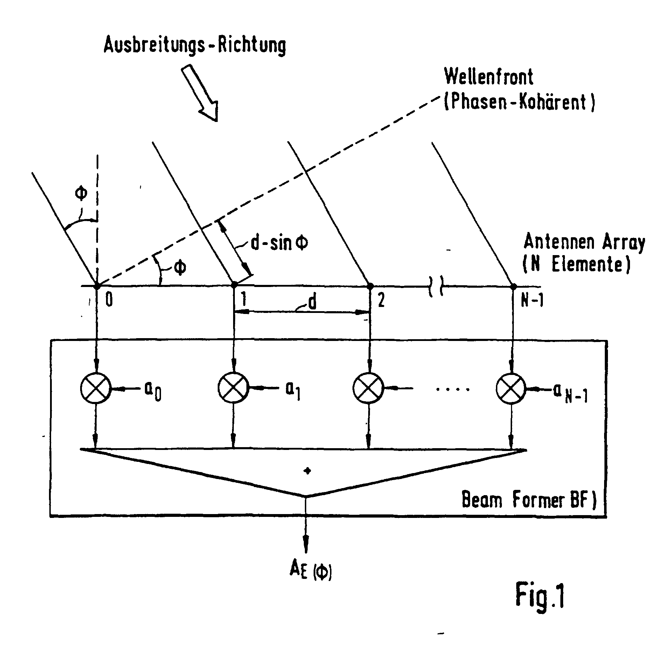

Figur 1 zeigt ein Strahlformungsnetzwerk BF (beam former), dem die Empfangssignale eines Antennen-Array mit N-Elementen parallel zugeführt sind. Der Winkel, unter dem die Wellenfront zu den Antennen-Elementen gelangt, ist mit $\phi$ bezeichnet. Die Empfangssignale werden mit komplexen Koeffizienten $a_0$, $a_1 \ldots a_{N-1}$ gewichtet, das heißt multipliziert, und in einem Summierer zusammengefaßt. Das Ausgangssignal $A_E(\phi)$ des Summierers, das das Antennendiagramm für den Empfänger darstellt, ergibt sich zu

$$A_E(\phi) = \sum_{n=0}^{N-1} a_n e^{-j2\pi n \frac{d}{\lambda} \sin\phi}$$

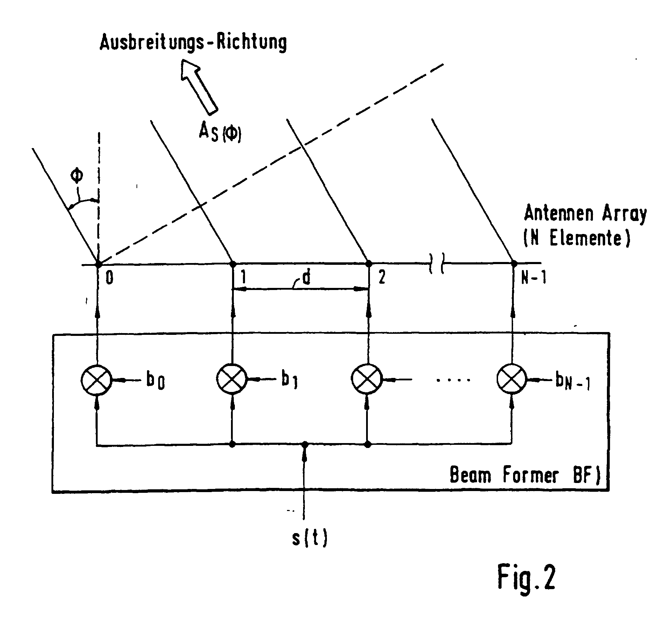

Figur 2 zeigt ein Strahlformungsnetzwerk EF für einen entsprechenden Sender, dem das Abstrahlsignal s(t) zugeführt ist. Dieses Abstrahlsignal wird in N parallelen Pfaden jeweils einer Wichtung, insbesondere einer Multiplikation, it komplexen Koeffizienten $b_0$ $b_1$...$b_{N-1}$ unterzogen. Die so gewichteten Signale dienen als Ansteuersignale für ein Antennen-Array mit 0 bis N-1 Antennenelementen. Die abgestrahlten Signale der Antennenelemente überlagert sich in der Luft. Die richtungsabhängige komplexe Amplitude ist das Antennendiagramm für die Senderichtung:

$$A_S(\phi) = \sum_{n=0}^{N-1} b_n e^{-j2\pi n \frac{d}{\lambda} \sin\phi}$$

Für $b_n = c \cdot a_n$ sind $A_S(\phi)$ und $A_E(\phi)$ formidentisch. c ist hierbei eine komplexe Konstante.

Da die Antennencharakteristik durch Übertragungsparameter beeinflußt wird, die im allgemeinen über den gesamten Frequenzbereich nicht konstant sind, werden die Ansteuersignale für das Strahlformungsnetzwerk BF jeweils in Frequenzsegmente zerlegt, so daß die Übertragungsfunktion in jedem Segment konstant ist. Für den Übertragungskoeffizienten im m-ten Segment des n-ten Senders gilt dann $\sigma_{m,n}$ = konstant.

Infolge der Übertragungsstrecken ergibt sich das Sende-Antennen-Diagramm in Abhängigkeit von m zu:

$$\overline{A}_S(\phi) = \sum_{n=0}^{N-1} b_n \sigma_{m,n} e^{-j2\pi n \frac{d}{\lambda} \sin\phi}$$

Eine Faktorisierung $\sigma_{m,n} = \sigma_m \xi_n$ ist erforderlich, damit das Antennendiagramm unabhängig von m ist und alle Spektralanteile des Signals in die gleiche Richtung gehen. Damit wird:

$$\overline{A}_S(\phi) = \sigma_m \sum_{n=0}^{N-1} b_n \xi_n e^{-j2\pi n \frac{d}{\lambda} \sin\phi}$$

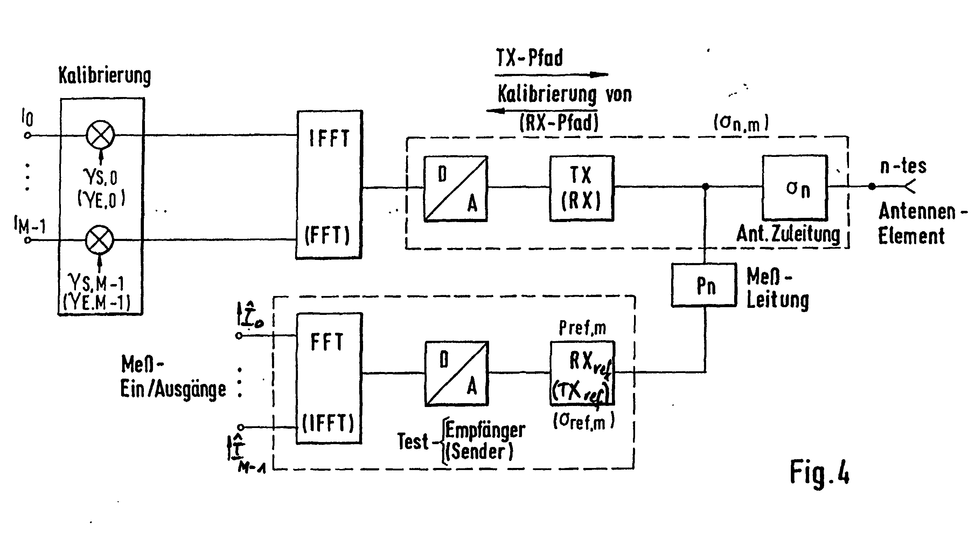

Für die Kalibrierung der Sender und/oder Empfänger dient das Blockschaltbild gemäß Figur 4. In Senderichtung werden die Ansteuersignale $I_o$ bis $I_{M-1}$, die beispielsweise ein digitaler Prozessor DSP liefert, dem Kalibrationsnetzwerk zugeführt. Das Kalibrationsnetzwerk besteht aus einer Multipliziereinrichtung, die so viele Multiplizierer umfaßt, wie ihr frequenzabschnittsweise aufgeteilte Ansteuersignale zuführbar sind.

Nach einer Fast-Fourier-Transformation FFT gelangen die Signale über einen D/A-Wandler zum Sender TX und über die Antennenzuleitung mit den Übertragungskoeffizienten $\sigma_n$ zum n-ten Antennen-Element. Der Sendepfad - TX-Pfad - ist durch die Übertragungskoeffizienten $\sigma_{n,m}$ gekennzeichnet, zwischen Senderausgang und Antennenzuleitung wird das Sendesignal abgegriffen und über eine Meßleitung mit dem Übertragungskoeffizient $\rho_n$ dem Referenzempfänge (Testempfänger) $RX_{ref}$ mit den Übertragungskoeffizienten $\rho_{ref,m}$ zugeführt. Nach A/D-Wandlung und Fast-Fourier-Transformation FFT erscheinen an den Meßausgängen die Empfängerausgangssignale $\hat{I}_o$... $\hat{I}_{M-1}$. Die komplexen Koeffizienten $\gamma_{S,O}$ bis $\gamma_{S,M-1}$ werden nun so eingestellt, daß die Kalibrierungsbedingung $\hat{I}_m = I_m$ erfüllt ist, d.h. die Senderausgangssignale stimmen nach Durchlaufen des Referenzempfängers mit den entsprechenden Aussteuersignalen überein.

Es erfolgt demnach eine Faktorisierung durch Kalibrierung für den TX-Pfad. Diese Kalibrierung ist für alle n = 1...N/TRX-Pfade durchzuführen.

Für die Messung im TX-Pfad gilt

$$\hat{I}_m = I_m \cdot \gamma_{s,m} \cdot \frac{\sigma_{n,m}}{\sigma_n} \cdot \rho_n \cdot \rho_{ref,m}$$

Mit der Abgleichbedingung ergibt sich:

$$\sigma_{m,n} \cdot \gamma_{s,m} = \frac{\overbrace{1}^{\sigma_m}}{\rho_{ref,m}} \cdot \frac{\overbrace{\sigma_n}^{\xi_n}}{\rho_n}$$

Für die Kalibrierung des Empfangspfades (RX-Pfad in Figur 4) erfolgt die Einspeisung der Ansteuersignale über eine inverse Fourier-Transformation IFFT und D/A-Wandlung in den Referenzsender $TX_{ref}$ (in Figur 4) mit den Übertragungskoeffizienten $\sigma_{ref,m}$. Über die Meßleitung und den Empfänger RX (in Figur (4), A/D-Wandlung und FFT erscheint am Ausgang des Kalibrationsnetzwerkes das Empfängerausgangssignal. Auch hier erfolgt die Einstellung der komplexen Kalibrierungskoeffizienten $\gamma_{E,O}$ bis $\gamma_{E,M-1}$ so, daß das Ansteuersignal und das entsprechende Meßsignal jeweils gleich groß sind. Für den RX-Pfad gilt demnach:

$$\rho_{m,n} \cdot \gamma_{E,m} = \frac{1}{\sigma_{ref,m}} \cdot \frac{\sigma_n}{\rho_n}$$

Die Einstellung der BF-Koeffizienten -Koeffizienten $a_n$ und $b_n$ des Strahlformnetzwerkes - erfolgt gemäß der Tabelle: $a_n = b_n$. Damit ergibt sich für Sende- und Empfangsrichtung die gleiche Form des Antennendiagramms. Die Beziehungen für die kalibrierten Antennendiagramme $\bar{A}_S (\phi)$ und $\bar{A}_E (\phi)$ sind ebenfalls in der Tabelle gezeigt. Sie unterscheiden sich lediglich durch einen Faktor c, der unabhängig von n ist.

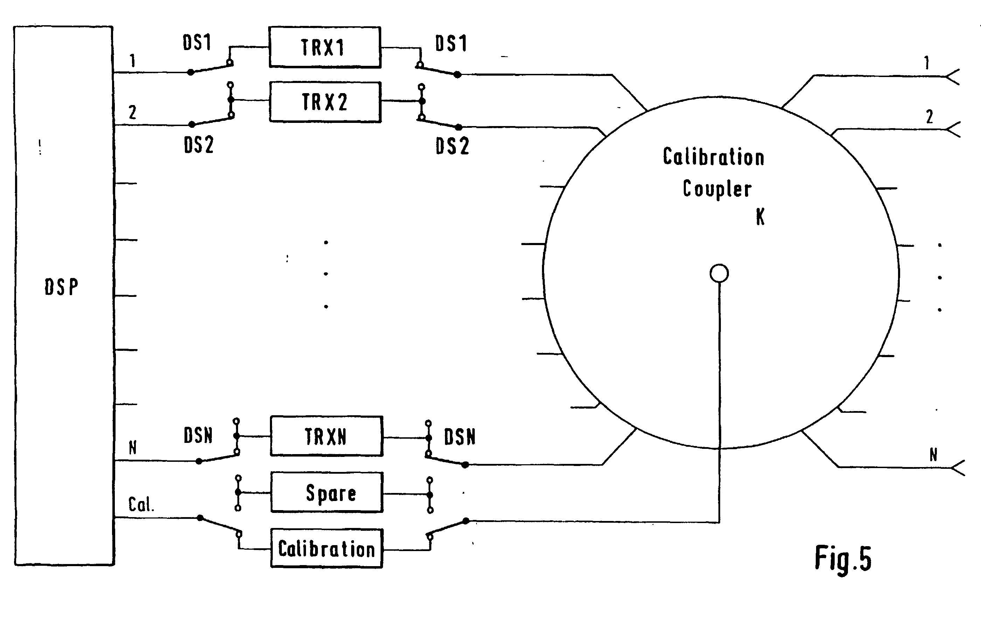

Es ist für die Kalibrierung jeweils nur ein Referenzempfänger und ein Referenzsender notwendig, an den die jeweiligen Sender und Empfänger für jedes Frequenzsegment einzeln anschaltbar sind. Figur 5 zeigt eine Anordnung zur Kalibrierung mit einem Kalibrierungskoppler K. Die Sender/Empfänger TRX1 bis TRX2 werden über entsprechende Doppelschalter DS1 bis DSN einzeln auf den

Kalibrierungskoppler geschaltet. Der Rotorausgang des Kalibrierungskopplers K ist an den Referenzempfänger/Referenzsender für die Kalibrierung (calibration) angeschlossen. Der Koppler K weist auch die entsprechenden Ausgänge zu dem Antennen-Array auf. Zur Bereitstellung von Ansteuersignalen -Testsignalen- ist ein digitaler Signalprozessor DSP vorgesehen, der auch die Messung der Ausgangssignale des Referenzempfängers/Referenzsenders vornimmt. Mit dem Schaltungsblock "Spare" ist eine Redundanzfunktion möglich.

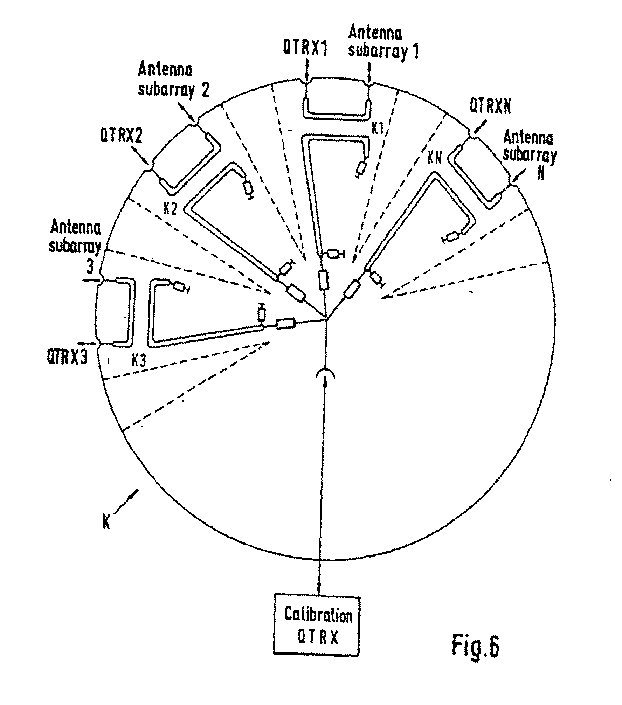

Den Innenaufbau des Kalibrierungskopplers K zeigt Figur 6. Die Eingänge bzw. Ausgänge der Sender und Empfänger sind mit QTRX1bis QTRXN bezeichnet. Die Eingänge bzw. Ausgänge der N Elemente des Antennen-Arrays mit Antenna subarray 1...N. Über Koppler K1 bis KN, die vorzugsweise in Streifenleitertechnik ausgeführt sind, werden die Eingangs- bzw. Ausgangssignale jeweils über Anpassungs/Abschlußwiderstände zum Rotorausgang geführt.

Nach erfolgtem Abgleich können die komplexen Koeffizienten $\gamma_S$ und $\gamma_E$ in einen Speicherchip abgelegt werden. Im Betrieb wird das Kalibrationsnetzwerk in den Sende- beziehungsweise Empfangszug geschaltet, vorzugsweise zwischen Strahlformungsnetzwerk und Sender beziehungsweise Empfänger. Es ist natürlich auch möglich, das Kalibrationsnetzwerk zusammen mit dem Strahlformungsnetzwerk in einer Baueinheit zusammenzufassen.

Gewünscht:

$$A_S(\phi) = c A_E(\phi)$$

gleiche Form des Antennendiagramms

$$c \neq f(n)$$

für

$$a_n = b_n$$

Einstellkoeffizient im BF für Senden/Empfangen gleich

Realisierung mit Kalibrierung

$$\overline{A}_S(\phi) = \sum_{n=0}^{N-1} b_n \cdot \sigma_{m,n}\, \gamma_{s,m} \cdot e^{-j2\pi n\frac{d}{\lambda}\sin\phi}$$

$$= \frac{1}{\rho_{ref,m}} \sum_{n=0}^{N-1} b_n \cdot \frac{\sigma_n}{\rho_n} \cdot e^{-j2\pi n\frac{d}{\lambda}\sin\phi}$$

$$\overline{A}_E(\phi) = \sum_{n=0}^{N-1} a_n \cdot \rho_{m,n}\, \gamma_{E,m} \cdot e^{-j2\pi n\frac{d}{\lambda}\sin\phi}$$

$$= \frac{1}{\sigma_{ref,m}} \sum_{n=0}^{N-1} a_n \cdot \frac{\sigma_n}{\rho_n} \cdot e^{-j2\pi n\frac{d}{\lambda}\sin\phi}$$

Nach der Kalibrierung und

mit

$$a_n = b_n$$

folgt

$$\overline{A}_S(\phi) = c\, \overline{A}_E(\phi)$$

$$c \neq f(n)$$

**Patentansprüche**

1.  Verfahren zur Kalibrierung eines Senders und/oder Empfängers, denen jeweils ein ansteuerbares Strahlformungsnetzwerk zugeordnet ist,
    **gekennzeichnet durch** die folgenden Schritte:

    -   die Ansteuersignale ($I_O$ - $I_{M-1}$) für das Strahlformungsnetzwerk (BF) werden jeweils in mehrere Frequenzsegmente aufgeteilt, und
    -   für jedes Frequenzsegment werden zur Kalibrierung des Sende- bzw. Empfangspfades eingespeiste Testsignale ($I_0$ - $I_{M-1}$) derart mit komplexen Koeffizienten ($\gamma_{S,0}$ - $\gamma_{S,M-1}$; $\gamma_{E,0}$ - $\gamma_{E,M-1}$) multipliziert beziehungsweise gewichtet, daß die Senderausgangssignale ($\hat{I}_0$ - $\hat{I}_{M-1}$) beziehungsweise die Empfängerausgangssignale nach Durchlaufen eines Referenzempfängers ($RX_{ref}$) beziehungsweie eines Referenzsender ($TX_{ref}$) jeweils mit den entsprechenden Testsignalen ($I_0$ - $I_{M-1}$) übereinstimmen.

**2.** Verfahren nach Anspruch 1,
**dadurch gekennzeichnet,**
**daß** die Aufteilung in die Frequenzsegmente derart vorgenommen wird, daß die Übertragungsfunktion in jedem der Frequenzsegmente konstant ist.

**3.** Anordnung zur Kalibrierung eines Senders und/oder Empfängers, denen jeweils ein ansteuerbares Strahlformungsnetzwerk (BF) zugeordnet ist, wobei ein Kalibrationsnetzwerk vorgesehen ist, das im Sende- bzw. Empfangsbetrieb in den Sende- bzw. Empfangszug schaltbar ist,
**dadurch gekennzeichnet,**
**daß** das Kalibrationsnetzwerk eine Vielzahl von Eingängen aufweist, denen eine entsprechende Anzahl frequenzsegmentweise aufgeteilter Testsignale ($I_0$ - $I_{M-1}$) zuführbar ist, und eine entsprechende Anzahl von Ausgängen aufweist, und daß das Kalibrationsnetzwerk so einstellbar ist, daß für jedes Frequenzsegment die Testsignale ($I_0$ - $I_{M-1}$) derart mit komplexen Koeffizienten ($\gamma_{S,0}$ - $\gamma_{S,M-1}$; $\gamma_{E,0}$ - $\gamma_{E,M-1}$) multipliziert bzw. gewichtet werden, daß die Senderausgangssignale ($\hat{I}_0$ - $\hat{I}_{M-1}$) bzw. die Empfängerausgangssignale nach Durchlaufen eines Referenzempfängers ($RX_{ref}$) bzw. eines Referenzsenders ($TX_{ref}$) jeweils mit den entsprechenden Testsignalen ($T_0$ - $T_{M-1}$) übereinstimmen.

**4.** Anordnung nach Anspruch 3,
**dadurch gekennzeichnet,**
**daß** das Kalibrationsnetzwerk in Form einer Multipliziereinrichtung vorgesehen ist.

**5.** Anordnung nach Anspruch 4,
**dadurch gekennzeichnet,**
**daß** die Multipliziereinrichtung im Sende- bzw. Empfangsbetrieb zwischen das Strahlformungsnetzwerk (BF) und ein Antennen-Array geschaltet ist.

**6.** Anordnung nach Anspruch 4 oder 5,
**dadurch gekennzeichnet,**
**daß** die den einzelnen Multiplizierern zugeführten komplexen Koeffizienten ($\gamma_{S,0}$ - $\gamma_{S,M-1}$; $\gamma_{E,0}$ - $\gamma_{E,M-1}$) so einstellbar sind, daß die ihnen zugeführten Testsignale ($I_0$ - $I_{M-1}$) jeweils mit den Senderausgangssignalen ($\hat{I}_0$ - $\hat{I}_{M-1}$) beziehungsweise Empfängerausgangssignalen nach dem Durchlaufen eines Referenzempfängers ($RX_{ref}$) beziehungsweise eines Referenzsender ($TX_{ref}$) übereinstimmen.

**7.** Anordnung nach einem der Ansprüche 3 bis 6,
**dadurch gekennzeichnet,**
**daß** zur Kalibrierung jeweils nur ein Referenzempfänger ($RX_{ref}$) beziehungsweise Referenzsender ($TX_{ref}$) vorgesehen ist, an den die jeweiligen Sender beziehungsweise Empfänger für jedes Frequenzsegment einzeln anschaltbar sind.

**8.** Anordnung nach Anspruch 7,
**dadurch gekennzeichnet,**
**daß** die Anschaltung der Sender- bzw. Empfänger an den Referenzempfänger ($RX_{ref}$) bzw. Referenzsender ($TX_{ref}$) und an das Antennen-Array über einen Kalibrierungskoppler (K) erfolgt.

**Claims**

**1.** Method to calibrate a transmitter and/or receiver to which in each case a selectable beam forming network is allocated, **characterised by** the following steps:

the selection signals ($I_O$ - $I_{M-1}$) for the beam forming network (BF) are in each case split into several frequency segments, and for every frequency segment to calibrate the transmitting or receiving path injected test signals ($I_O$ - $I_{M-1}$) of the type with complex coefficients ($\gamma_{S,O}$ - $\gamma_{S,M-1}$; $\gamma_{E,O}$ - $\gamma_{E,M-1}$) multiplied or weighted so that the transmitting output signals ($\hat{I}_O$ - $\hat{I}_{M-1}$) or the receiving output signals in each case agree with the corresponding test signals ($I_O$ - $I_{M-1}$) after passing through a reference receiver ($RX_{ref}$) or a reference transmitter ($TX_{ref}$).

**2.** Method according to claim 3, **characterised in that** the frequency segments are split in such a way that the transmission function is constant in each of the frequency segments.

**3.** Arrangement to calibrate a transmitter and/or receiver to which in each case a selectable beam forming network (BF) is allocated, whereby a calibration network is provided which in transmitting or receiving operation can be switched into the transmitting- or receiving mode, **characterised in that** the calibration network has a large number of inputs, to which a corresponding number of test signals ($I_O$ - $I_{M-1}$) split frequency segment-wise can be fed, and has a corresponding number of outputs and that the calibration network can be adjusted so that for every frequency segment the test signals ($I_O$ - $I_{M-1}$) are multiplied or weighted with complex coefficients ($\gamma_{S,O}$ - $\gamma_{S,M-1}$; $\gamma_{E,O}$ - $\gamma_{E,M-1}$) in such a way that the transmitting output signals ($\hat{I}_O$ - $\hat{I}_{M-1}$) or the receiver output signals after passing through a reference receiver ($RX_{ref}$) or a reference transmitter ($TX_{ref}$) agree in each case with the corresponding test signals ($T_O$ - $T_{M-1}$).

**4.** Arrangement according to claim 3,
**characterised in that** the calibration network is designed in the form of a multiplicator device.

**5.** Arrangement according to claim 4,
**characterised in that** the multiplicator device is connected in transmitting or receiving operation between the beam forming network (BF) and an antenna array.

**6.** Arrangement according to claim 4 or 5,
**characterised in that** the complex coefficients ($\gamma_{S,O}$ - $\gamma_{S,M-1}$; $\gamma_{E,O}$ - $\gamma_{E,M-1}$) allocated to the individual multiplicators can be adjusted so that the tests signals ($I_O$ - $I_{M-1}$) fed to them agree in each case with the transmitting output signals ($\hat{I}_O$ - $\hat{I}_{M-1}$) or receiver output signals after passing through a reference receiver ($RX_{ref}$) or a reference transmitter ($TX_{ref}$).

**7.** Arrangement according to the claims 3 to 6,
**characterised in that** for calibration in each case only one reference receiver ($RX_{ref}$) or one reference transmitter ($TX_{ref}$) is provided to which the particular transmitters or receivers can be connected individually for each frequency segment.

**8.** Arrangement according to claim 7,
**characterised in that** the transmitters or receivers are connected to the reference receiver ($RX_{ref}$) or reference transmitter ($TX_{ref}$) and to the antenna array via a calibration coupler (K).

**Revendications**

**1.** Procédé pour l'étalonnage d'un émetteur et/ou d'un récepteur, auquel est attribué à chaque fois un réseau concentrateur de faisceaux orientable, **caractérisé par** les étapes suivantes selon lesquelles

- les signaux de guidage ($I_0$ - $I_{M-1}$) pour le réseau concentrateur de faisceaux (BF) sont divisés à chaque fois en plusieurs segments de fréquences et
- pour chaque segment de fréquences, des signaux d'essai ($I_0$-$I_{M-1}$) alimentés en courant pour l'étalonnage des chemins de réception ou d'émission sont multipliés ou pondérés en utilisant des coefficients complexes ($\gamma_{S,0}$ - $\gamma_{S,M-1}$ ; $\gamma_{E,0}$ - $\gamma_{E,M-1}$) de manière à ce que les signaux de sortie de l'émetteur ($I_0$ - $I_{M-1}$) ou les signaux de sortie du récepteur après un mouvement continu du récepteur de référence ($RX_{ref}$) ou de l'émetteur de référence ($TX_{ref}$) concordent à chaque fois avec les signaux d'essai correspondants ($I_0$ - $I_{M-1}$).

**2.** Procédé selon la revendication 1, **caractérisé en ce que** la division en segments de fréquences est effectuée de telle sorte que la fonction de transmission dans chacun des segments de fréquences soit constante.

**3.** Agencement pour l'étalonnage d'un émetteur et/ou d'un récepteur, auquel est attribué à chaque fois un réseau concentrateur de faisceaux orientable (BF), moyennant quoi un réseau d'étalonnage commutable en mode d'émission ou de réception en faisceau d'émission ou de réception est prévu, **caractérisé en ce que** le réseau d'étalonnage présente un grand nombre d'entrées, permettant d'alimenter un nombre correspondant de signaux d'essai

($I_0$ - $I_{M-1}$) divisés en segments de fréquences, et présente un nombre correspondant de sorties, et **caractérisé en ce que** le réseau d'étalonnage peut être réglé de telle sorte que, pour chaque segment de fréquences, des signaux d'essai ($I_0$ - $I_{M-1}$) sont multipliés ou pondérés en utilisant des coefficients complexes ($\gamma_{S,0}$ - $\gamma_{S,M-1}$ ; $\gamma_{E,0}$-$\gamma_{E,M-1}$) de sorte que les signaux de sortie de l'émetteur ($I_0$ - $I_{M-1}$) ou les signaux de sortie du récepteur, après un mouvement continu du récepteur de référence ($RX_{ref}$) ou de l'émetteur de référence ($TX_{ref}$), concordent à chaque fois avec les signaux d'essai correspondants ($I_0$ - $I_{M-1}$).

4. Agencement selon la revendication 3, **caractérisé en ce qu'**un réseau d'étalonnage est prévu sous forme de dispositif multiplicateur.

5. Agencement selon la revendication 4, **caractérisé en ce que** le dispositif multiplicateur peut être commuté en mode de réception ou d'émission entre le réseau concentrateur de faisceaux (BF) et un réseau d'antennes.

6. Agencement selon la revendication 4 ou 5, **caractérisé en ce que** les coefficients complexes ($\gamma_{S,0}$ - $\gamma_{S,M-1}$ ; $\gamma_{E,0}$ - $\gamma_{E,M-1}$) résultant de multiplicateurs uniques peuvent être ajustables de sorte que les signaux d'essai qui en découlent ($I_0$ - $I_{M-1}$) concordent à chaque fois avec les signaux de sortie de l'émetteur ($I_0$ - $I_{M-1}$) ou les signaux de sortie du récepteur après un mouvement continu du récepteur de référence ($RX_{ref}$) ou de l'émetteur de référence ($TX_{ref}$).

7. Dispositif selon l'une quelconque des revendications 3 à 6, **caractérisé en ce qu'**un seul récepteur de référence ($RX_{ref}$) ou un seul émetteur de référence ($TX_{ref}$), à partir duquel chaque émetteur ou récepteur peut être activé individuellement pour chaque segment de fréquences, est à chaque fois prévu pour l'étalonnage.

8. Agencement selon la revendication 7, **caractérisé en ce que** l'activation des émetteurs ou des récepteurs se produit au niveau des récepteurs de référence ($RX_{ref}$) ou des émetteurs de référence ($TX_{ref}$) et au niveau du réseau d'antennes au moyen d'un coupleur d'étalonnage (K).

Fig.1

Fig. 2

$$b_0 \quad b_1 \quad b_{N-1}$$

$$S_m$$

$$\sigma_{m,0} \qquad 0$$

$$\sigma_{m,1} \qquad 1$$

$$\sigma_{m,N-1} \qquad N-1$$

$$\tilde{A}_S \, (\Phi)$$

BF

Übertragungsstrecken zu
Antennenelementen

Antennen
Array

Fig. 3

Fig.4

Fig.5

EP 0 934 609 B1

Fig.6

14